# FASCICULE DE BREVET EUROPEEN

(11) **EP 1 588 890 B1**
(45) Date de publication et mention de la délivrance du brevet: **22.10.2008**
(21) Numéro de dépôt: 04300211.2
(22) Date de dépôt: 19.04.2004
(51) Int. Cl.: B60N 2/015

(54) **Dispositif de fixation d'un siège amovible sur un plancher de véhicule automobile**
Befestigungsvorrichtung eines abnehmbaren Sitzes an einem Kraftfahrzeugboden
Device for fixing a removable seat on a motor vehicle floor

(30) Priorité: 18.04.2003 FR 0304858
(43) Date de publication de la demande: 26.10.2005
(73) Titulaire: RENAULT S.A.S., 92100 Boulogne Billancourt (FR)
(72) Inventeur: Riou, Jean-Christophe, 78640 Villiers Saint Frederic (FR); Beaufour, Thierry, 78320 Levy-Saint-Nom (FR)

(56) Documents cités:
- EP-A- 0 143 678
- DE-A- 19 628 382
- FR-A- 2 784 629
- GB-A- 2 008 938
- US-A1- 2004 066 055
- US-B1- 6 250 842
- US-B1- 6 254 054

## Description

L'invention concerne un dispositif de fixation d'un siège amovible sur un plancher de véhicule automobile.

Certains types de véhicules automobiles, et notamment pour les véhicules utilitaires, comportent des sièges amovibles afin de pouvoir aménager l'espace intérieur en fonction des besoins : transport de personnes et/ou de matériel.

Le document FR-2 786 445 décrit un dispositif de fixation de siège amovible comprenant un rail comportant une rainure permettant de le monter coulissant sur des goujons de guidage fixés au plancher. Un verrou monté sur le dessus du rail bloque les goujons contre des butées internes du rail. L'accès au mécanisme par le dessus du rail nécessite toutefois de ménager un espace libre entre le rail et le siège. Il n'est alors pas possible d'utiliser cet espace pour l'implantation d'un tiroir ou bac de rangement. Par ailleurs, le verrouillage du siège nécessite le déplacement de ce dernier, ce qui n'est pas toujours aisé compte tenu du poids relativement élevé d'un siège. Enfin, un verrouillage correct du siège nécessite des dispositifs de fixation sur chaque rail qui doivent être manoeuvrés l'un après l'autre. Un oubli d'actionnement d'un des mécanismes par l'utilisateur peut alors s'avérer dangereux lors d'un accident.

Le document EP-143 678 décrit un dispositif de fixation dans lequel les rails de fixation du siège comporte des goujons qui sont introduits dans des lumières en forme de trou de serrure disposées sur un support de siège. Par translation du siège, les goujons sont amenés au niveau de la partie étroite des lumières, et sont maintenus en position par des lamelles élastiques. Un verrouillage simultané des différents goujons est ainsi obtenu. Le déverrouillage nécessite toutefois l'actionnement d'un bouton poussoir par goujon pour le débloquer, ce qui prend du temps. Par ailleurs, en cas de dysfonctionnement d'un bouton, le siège ne peut pas être déverrouillé de son support.

Le document US 6 250 842 concerne un dispositif pour fixation démontable d'une banquette. Le dispositif décrit dans ce document est conforme à celui énoncé dans le préambule de la revendication 1.

L'invention vise à pallier ces inconvénients en proposant un dispositif de fixation simple et robuste, permettant une fixation rapide d'un siège au plancher, et dont l'actionnement est réalisé par un côté du siège permettant d'utiliser l'espace entre le plancher et l'assise.

A cet effet, un objet de l'invention concerne un dispositif de fixation d'un siège amovible sur un plancher de véhicule automobile, comprenant :
- au moins deux rails comportant chacun au moins deux orifices permettant un montage sur au moins des premier et deuxième goujons de blocage fixés sur ledit plancher,
- une platine de verrouillage comportant au moins deux bras solidaires d'un profilé transversal à leur extrémité, chaque bras étant monté coulissant dans un desdits rails et comportant au moins deux lumières longitudinales permettant le passage desdits premier et deuxième goujons, la platine coulissant entre une position de verrouillage dans laquelle lesdits goujons sont bloqués dans les lumières, et une position de déverrouillage dans laquelle lesdits goujons sont libres de sorte que les rails peuvent: être démontés desdits goujons.

Le seul déplacement de la platine permet le verrouillage de chaque rail du siège par rapport au plancher. Cet arrangement facilite ainsi le montage et démontage du siège, et il n'y a plus de risque d'oubli de verrouillage d'un rail par un utilisateur. L'indexage du siège est par ailleurs réalisé de manière très simple par la platine de verrouillage.

Avantageusement, chaque rail présente à proximité desdits orifices des butées aptes à bloquer un déplacement de la platine suivant au moins un axe vertical et à bloquer le déplacement des goujons suivant la direction longitudinale.

Avantageusement, le dispositif de fixation présente des moyens de blocage coopérant avec lesdits rails afin de bloquer le coulissement longitudinal de la platine en position de verrouillage. La platine ne peut ainsi être déverrouillée involontairement, par exemple lors d'un choc.

Plus particulièrement, les moyens de blocage comprennent un axe de rotation s'étendant transversalement aux bras et monté à rotation sur le profilé transversal, et au moins une plaque de blocage solidaire de l'axe de rotation à proximité d'un desdits rails, et ledit rail comporte au moins un doigt de blocage, ladite au moins une plaque de blocage étant mobile entre une position de blocage dans laquelle elle peut coopérer avec ledit au moins un doigt afin de limiter le coulissement longitudinal de la platine suivant au moins une direction, et une position de déblocage dans laquelle elle est située à distance dudit au moins un doigt, autorisant le coulissement longitudinal de la platine suivant ladite au moins une direction.

Notamment, lesdits au moins deux rails comportent chacun deux doigts de blocages situés dans un même plan longitudinal à une distance suffisante l'un de l'autre pour permettre l'insertion d'une plaque.

Avantageusement, au moins un moyen de préhension relié auxdits moyens de blocage afin de les manoeuvrer est prévu, afin de faciliter leur actionnement.

Avantageusement, lorsque la platine est en position de verrouillage, le profilé transversal est situé à proximité des extrémités desdits rails. Le dispositif verrouillé reste ainsi très compact et peu encombrant.

Avantageusement, chaque rail comporte sur sa partie supérieure, en regard desdits orifices, des butées élastiques destinées à venir en appui contre les goujons permettant de réduire les vibrations et les bruits produits,

Un autre objet de l'invention concerne un siège amovible pour véhicule automobile comprenant au moins un dispositif de fixation selon l'une des revendications précédentes.

L'invention est maintenant décrite en référence aux dessins annexés, non limitatifs, dans lesquels ;
- la figure 1 est une vue en perspective d'un siége amovible partiellement représenté comportant un dispositif de fixation selon l'invention ;
- la figure 2 est une vue en perspective d'une platine de verrouillage d'un dispositif de fixation selon l'invention ;
- la figure 3 est une vue en coupe longitudinale d'un dispositif de fixation selon l'invention en position de déverrouillage;
- la figure 4 est une vue similaire à la figure 3, le dispositif de fixation étant en position de verrouillage ;
- la figure 5 est une vue en coupe transversale suivant la ligne B-B de la figure 4 ;
- la figure 6 est une vue en coupe transversale suivant la ligne A-A de la figure 4 ;
- la figure 7 est une vue en coupe longitudinale d'un moyen de blocage d'un dispositif de fixation de l'invention en position de blocage;
- la figure 8 est une vue similaire à la figure 7, le moyen de blocage étant en position de déblocage ;
- la figure 9 est une vue en perspective de l'axe de rotation du moyen de blocage représenté figures 7 et 8.

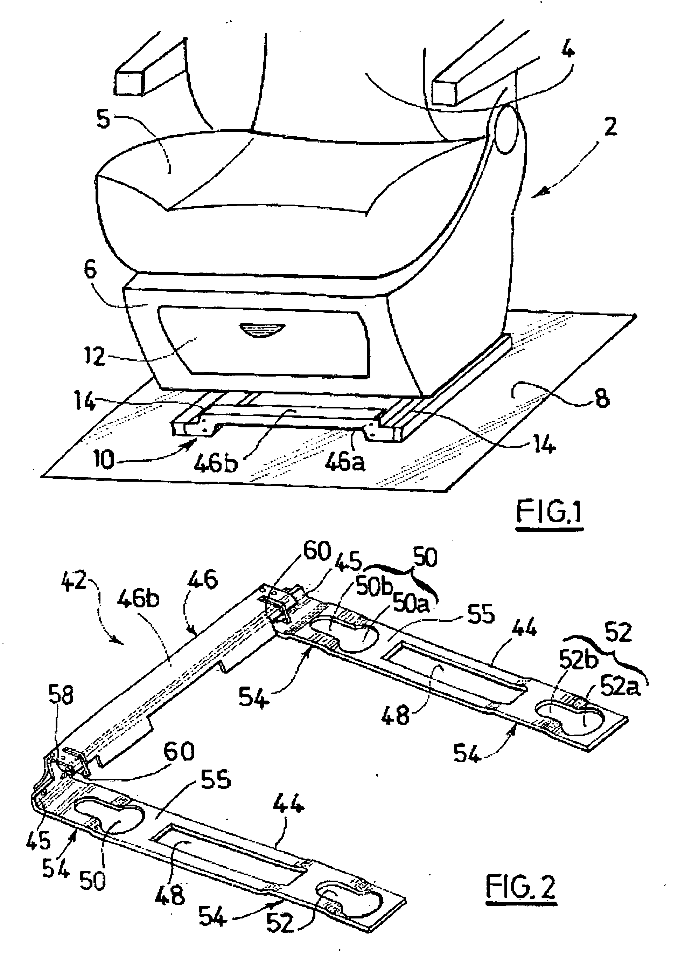

En référence à la figure 1, un siège amovible 2 pour véhicule automobile est partiellement représente. Il comporte un dossier 4 et une assise 5 reposant sur un support 6. Le siège est fixé au plancher 8 du véhicule au moyen d'un dispositif de fixation 10 selon l'invention. Sous l'avant de l'assis 5, un tiroir ou bac de rangement 12 est prévu dans le support 6, au dessus du dispositif de fixation 10.

Dans la suite du texte, on définit par direction longitudinale, la direction longitudinale d'un véhicule, et par direction verticale, la direction sensiblement perpendiculaire au plancher 8.

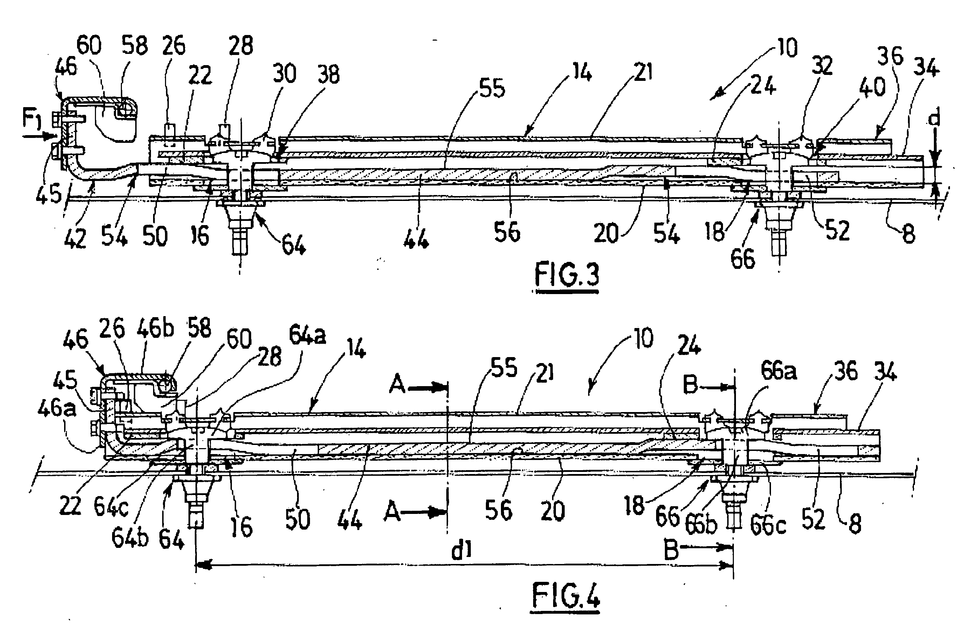

Les figures 3 et 4 représentent des vues en coupe d'un dispositif de fixation 10 selon l'invention. Ce dernier comprend deux rails 14 creux sensiblement parallèles, dont un seul est visible sur les figures. Chaque rail 14 comporte deux orifices 16, 18 formés dans sa paroi inférieure 20, destinée à venir en vis-à-vis du plancher 8, Ces orifices 16, 18 sont de préférence circulaires.

A l'intérieur du rail 14, sont fixées des butées 22, 24 situées à une distance d de la paroi inférieure 20 du rail (figure 3). Ces butées 22, 24 sont formées de plaques s'étendant sensiblement parallèlement à la paroi inférieure 20 et sont disposées sur le pourtour de chaque orifice 16, 18 respectivement.

Le rail 14 comporte également, deux doigts de blocage 26, 28 faisant partie d'un moyen de blocage qui sera décrit plus en détails plus loin. Ces doigts s'étendent suivant une direction sensiblement verticale, perpendiculairement, à la paroi inférieure 20 du rail, dans un même plan longitudinal vertical. Ils sont disposés sur la surface externe latérale du rail 14 dirigée vers l'autre rail. Les doigts 26, 28 de chaque rail sont disposés du côté d'une même extrémité des rails, de manière symétrique, et sont dirigés vers le support 6 du siège.

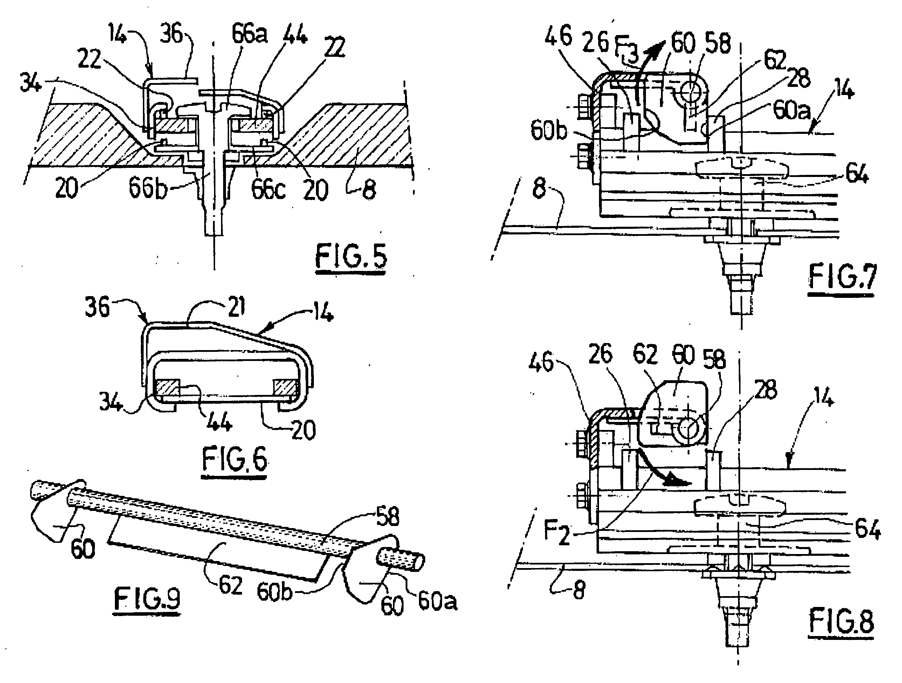

Sur sa paroi supérieure 21, opposée à la paroi 20, le rail 14 présente, dans sa cavité, des butées élastiques 30, 32 dirigées vers la paroi inférieure 20, sensiblement en regard des orifices 16 et 18 respectivement (figure 3). Ces butées sont par exemple: circulaires (elles ne sont pas représentées sur la figure 5).

Dans le mode de réalisation représenté, en référence aux figures 3 à 6, le rail 14 est formé de trois éléments soudés. Un profilé ouvert: inférieur 34, dont la section transversale est en forme de C ouvert en direction du plancher 8, la paroi inférieure 20 formée d'une plaque sensiblement rectangulaire fermant le profilé ouvert 34, et un profilé ouvert supérieur 36 formant la paroi supérieure 21 du rail. Ces différents, éléments peuvent, par exemple, être fabriqués par pliage de tôles d'acier. On peut toutefois envisager un rail réalisé d'une seule pièce.

Les butées 22, 24 sont solidaires du fond du profilé inférieur 34 qui présente des orifices 38, 40 situés en regard des orifices 16, 18 respectivement, et sensiblement de mêmes dimensions. Les butées élastiques 30, 32 sont fixées sur le profilé ouvert supérieur 36 ainsi que les doigts de blocage 26, 28.

Le dispositif de fixation 10 selon l'invention comporte également une platine de verrouillage 42 représentée figure 2. La platine présente deux bras 44, sensiblement parallèles, solidaires d'un profilé transversal 46 à leur extrémité. Chaque bras 44 se présente sous la forme d'une plaque allongée sensiblement rectangulaire qui peut coulisser dans un rail 14. De préférence, un bras 44 coulisse dans la cavité du rail formée par le profilé ouvert inférieur 34 et la paroi inférieure 20, tel que visible sur les figures 3 à 6.

A leur extrémité située du côté du profilé transversal 46, les bras 44 présentent un rebord 45 sensiblement vertical, qui sert à la fois à la fixation du profilé 46 et, éventuellement, de butée longitudinale en venant en appui contre l'extrémité des rails 14. Le profilé transversal 46 présente une section sensiblement en forme de coin à angle droit dont un côté 46a est fixé au rebord 45, par exemple par vissage ou analogue, et l'autre côté 46b s'étend sensiblement parallèlement aux bras 44, au dessus de ces derniers (figure 4). Le côté 46a présente une largeur moindre sur une partie de sa longueur, tel que visible sur la figure 1, qui permet le passage d'une main entre le plancher 8 et le profilé transversal 46.

Chaque bras 44 comporte deux lumières longitudinales 50, 52, sensiblement identiques dont l'une 50 est disposée à proximité du profilé transversal 46 et l'autre 52 à proximité de l'extrémité libre du bras. Chaque lumière 50, 52 présente une partie élargie 50a, 52a et une partie étroite 50b, 52b, les parties élargies 50a, 52a de toutes les lumières étant orientées du même côte de la platine 42 (figure 2). Sur les figures, les lumières présentent, sensiblement une forme de trou de serrure.

Au niveau des parties étroites 50b, 52b, chaque bras présente en section longitudinale une zone surélevée 54 au niveau de laquelle sa, surface supérieure 55 se trouve dans un plan situé légèrement au dessus du reste du bras (figures 2 à 4). Dans ces zones surélevées 54, la surface supérieure 55 du bras est à une distance d de la paroi inférieure 20 du rail, tandis que, hors de ces zones 54, la surface inférieure 56 du bras est en appui contre la paroi inférieure 20 (figure 3). Ces zones surélevées peuvent être formées par emboutissage ou par une surépaisseur. De préférence, la transition entre les zones surélevées 54 et le reste de la plaque formant un bras est en pente douce.

Les lumières 50, 52 sont prévues sur les bras 44 de manière que, lorsque la platine est dans une position de verrouillage, représentée figure 3, la partie étroite 50b, 52b de chaque lumière est sensiblement en regard des orifices 16, 18 (et 38, 40) du rail respectivement, et lorsque la platine est dans une position de déverrouillage, représentée figure 4, la partie élargie 50a, 52a de chaque lumière est sensiblement en regard des orifices 16, 18 (et 38, 40) du rail respectivement.

Ainsi, dans la portion de verrouillage, dans les zones surélevées 54, la surface supérieure 55 d'un bras est en contact contre la face inférieure des têtes 64a, 66a des goujons 64, 66 de sorte que la platine de verrouillage 42 est immobilisée suivant la direction verticale par rapport aux rails 14, et ne peut vibrer.

Comme on peut le voir sur la figure 2, les bras 44 peuvent également comprendre chacun un évidement 48 à des fins d'allégement.

Le profilé transversal 46 comporte également un axe de rotation 58 qui fait partie d'un moyen de blocage de la platine. Cet axe est fixé à l'extrémité libre du côté 46b du profilé. A proximité des extrémités de cet axe de rotation 58, sont fixées deux plaques de blocage 60 qui s'étendent dans des plans sensiblement perpendiculaires à l'axe, tel que représenté sur les figures 7 à 9, Cet axe 58 porte également un moyen de préhension 62, forme d'une plaque rectangulaire solidaire de l'axe 58 entre les plaques 60, tel que visible sur la figure 9. Cette plaque s'étend dans le même plan ou dans un plan parallèle aux côtés 60a des plaques 60 (figures 7 et 9). Des fentes ménagées dans le profilé transversal 46 permettent de laisser passer les plaques 60 (figure 2).

L'axe de rotation 58, les plaques 60 et le moyen de préhension 62 font partie d'un moyen de blocage de la platine apte à empêcher son coulissement longitudinal lorsqu'elle est en position de Le moyen de préhension 62 permet une rotation aisée de l'axe 58 pour l'actionnement du moyen de blocage.

Les plaques 60 sont telles qu'elles s'étendent dans le même plan que les doigts de blocages 26, 28 du rail. Elles ont des dimensions telles que, lorsque la platiné est dans la position de verrouillage, elles peuvent être déplacées par rotation de l'axe 58 entre une position de blocage, représentée figure 7, dans laquelle chaque plaque 60 coopère avec deux doigts 26, 28 afin de bloquer tout coulissement de la platine suivant la direction longitudinale ; et une position de déblocage, représentée figure 8, dans laquelle chaque plaque 60 est située à distance des doigts 26, 28, autorisant le coulissement de la platine.

Dans l'exemple représenté, en position de blocage, une plaque 60 est située entre les doigts 26, 28, un 60a de ses côtés étant en appui contre un des doigts 28, tandis que son côté opposé 60b est à proximité de l'autre doigt 26 (figure 7)- Ainsi, en cas de choc frontal, les plaques 60 vont limiter le déplacement de la platine de verrouillage en venant buter contre les doigts 26 situés à proximité du profilé 46. La platine ne peut alors passer de sa position de verrouillage à sa position de déverrouillage, assurant la sécurité du passager. En cas de choc, le déplacement de la platine est dû à la propre inertie de celle-ci, la résistance à la rotation de l'axe 58 n'a pas donc besoin d'être très élevée, mais doit être suffisante pour contrer ce mouvement.

Afin de faciliter la rotation de la plaque 60, ses deux côtés sensiblement parallèles 60a et 60b sont reliés par une surface courbe, l'un des côtés 60b étant plus court que l'autre 60a (figure 7).

Comme on peut le voir sur les figures 3 à 5, chaque rail 14 est destiné à coopérer avec des premier 64 et deuxième 66 goujons de blocage fixés dans le plancher 8, dans une partie en retrait de celui-ci.

La distance d1 qui sépare ces goujons est sensiblement égale à la distance qui sépare les centres des orifices 16 et 18 d'un rail (figure 4). Les goujons présentent chacun une tête 64a, 66a de diamètre inférieur à la largeur des parties élargies 50a, 52a des lumières et aux diamètres des orifices 16, 18, 38, 40 et supérieure à la largeur de la partie étroite 50b, 52b des lumières. Le corps 64b, 66b de chaque goujon présente un diamètre inférieur aux parties étroites 50b, 52b. L'extrémité du corps de chaque goujon est par exemple vissée, ou analogue, dans le plancher 8 tel que représenté figure 5. Une embase 64c, 66c solidaire du corps 64b, 66b des goujons est prévue pour supporter la paroi inférieure 20 des rails, tel que visible sur les figures 3 et 4, De préférence., cette embase est en matière plastique afin d'amortir les vibrations et de réduire les bruits.

De manière connue, les rails 14 sont montés fixes sur le siège 2, le long des bords latéraux du siège. Dans le mode de réalisation représenté, le profile transversal 46 de la platine 42 est disposé sous la partie avant de l'assise 5, tel que visible sur la figure 1, 11 est ainsi facilement accessible. Le dispositif de fixation selon l'invention est compact et permet d'optimiser l'utilisation de l'espace entre l'assise et le plancher, par exemple en y plaçant un tiroir 12, Les rails peuvent être montés coulissant sur le siège 2, le déverrouillage de la platine 42 étant, par exemple, préconisé en position arrière du siège.

L'installation du siège 2 sur le plancher 8 est réalisée de la manière suivante.

La platine de verrouillage 42 étant montée dans les rails 14 en position de déverrouillage, on abaisse le siège 2 de sorte que les goujons 64, 66 pénètrent dans les orifices correspondants 16, 18 des rails, en traversant la platine 42 au travers des parties élargies 50a, 52a. des Lumières, Les têtes 64a, 66a des goujons viennent alors s'appuyer contre les butées élastiques 30, 32 des rails 14, la paroi inférieure 20 de ces derniers reposant sur les embases 64c, 66c des goujons. La hauteur des goujons est telle que, lorsque le siége repose sur les goujons, la tête d'un goujon est située à la hauteur des butées 22, 24, et des orifices 38, 40 du profilé ouvert inférieur 34 du rail. Ainsi, en cas de mouvement du siège et donc des rails dans la direction longitudinale du véhicule, par exemple suite à un choc, les têtes de goujons, ainsi que les bords des orifices 22, 24 forment des butées bloquant: le mouvement des rails.

Ensuite, par pression contre le profile transversal 46 de la platine dans la direction de la flèche F1 de la figure 3, on fait coulisser la platine 42 de sa position de déverrouillage vers sa position de verrouillage représentée figure 4. Les goujons 64, 66 sont alors dans les parties étroites 50a, 52a. des lumières de la platine, la surface supérieure 55 de celle-ci passant sous tes têtes des goujons, tel que visible sur la figure 4, et étant en appui contre les butées 22, 24 du rail. Il est alors impossible de faire sortir les rails des goujons, les rails sont verrouillés par rapport aux goujons.

Enfin, afin de bloquer la platine 42 par rapport aux rails, on fait tourner l'axe de rotation 58 suivant la flèche F2 de la figure 8, en passant la main sous le profilé transversal 46 er en appuyant sur la plaque 62, eL l'on abaisse les plaques 60 entre les doigts de butées 26, 28.

On remarquera que les plaques 60 sont telles que, même si elles sont en position de blocage lorsque la platine est déverrouillée, le déplacement de cette dernière vers sa position de verrouillage ne sera pas gêné. En effet, la pression des doigts 26. les plus proches du profilé 46, sur les plaques 60 provoquera leur rotation. On remarquera également que, lorsqu'elle est verrouillée, le déplacement de la platine dans la direction de l'extrémité libre de ses bras est limité d'une part par la butée du rebord 45 du profilé 46 contre l'extrémité des rails et d'autre part par les doigts 28. Dans d'autres modes de réalisation non représentés, on peut envisager de supprimer ces doigts 28, ou l'on peut laisser un espace entre les rails et le profilé transversal, en position de verrouillage. Le déplacement de la platine dans la direction opposée est en revanche bloqué uniquement par la butée des plaques 60 contre les doigts 26.

Grâce au dispositif selon l'invention, il n'est pas nécessaire de translater le siège pour le verrouiller, ce qui est particulièrement avantageux pour les sièges présentant un poids élevé.

Pour démonter le siège 2, il suffit de débloquer les plaques 60 en tirant sur le moyen de préhension 62 afin de faire tourner l'axe 58 suivant la flèche F3 de la figure 7, puis de tirer la platine 42 dans le sens inverse de la flèche F1 [figure 3) pour la déplacer dans sa position de déverrouillage. Les rails sont alors libres par rapport, aux goujons, et le siège peut être enlevé.

Bien entendu, d'autres modes de réalisation de l'invention peuvent être envisagés. Notamment, le profilé transversal 46 de la platine peut être disposé sous le dossier 4 du siège.

En utilisation sur des banquettes, un peut prévoir plus de deux rails pour assurer une bonne fixation au plancher.

A la place des plaques 60, des crochets venant en prise avec un axe transversal horizontal du rail peuvent être prévus.

Eventuellement, une seule plaque 60, coopérant avec un ou deux doigts, peut être prévue. Il est toutefois préférable de prévoir des moyens de blocage au niveau de chaque rail ou au niveau des rails extrêmes pour répartir au mieux les forces exercées sur les pièces en cas de choc.

Le moyen de préhension peut également se présenter sous la forme d'une poignée évidée.

On peut également prévoir un nombre plus grand de goujons pour assurer la fixation du siège.

## Revendications

1. Dispositif de fixation (10) d'un siège amovible (2) sur un plancher (8) de véhicule automobile, comprenant au moins deux bras, chaque bras (44) étant monté coulissant et comportant au moins deux lumières longitudinales (50, 52) permettant le passage de premier (64) et deuxième (66) goujons de blocage fixés sur ledit plancher, chaque bras étant coulissant entre une position de verrouillage dans laquelle lesdits goujons sont bloqués dans les lumières, et une position de déverrouillage dans laquelle lesdits goujons sont libres **caractérisé en ce qu'**il comprend :
- au moins deux rails (14) comportant chacun au moins deux orifices (16, 18) permettant un montage sur au moins les premier (64) et deuxième (66) goujons,
- une platine de verrouillage (42) qui comporte au moins les deux bras (44) solidaires d'un profilé transversal (46) à leur extrémité, chaque bras (44) étant monté coulissant dans un desdits rails (14), la platine (42) coulissant comme ses bras entre la position de verrouillage dans laquelle lesdits goujons sont bloqués dans les lumières, et la position de déverrouillage dans laquelle lesdits goujons sont libres de sorte que les rails peuvent être démontés desdits goujons,
- des moyens de blocage (58, 60, 26, 28) qui coopèrent avec lesdits rails (14) afin de bloquer le coulissement longitudinal de la platine en position de verrouillage, les moyens de blocage comprenant un axe de rotation (58) s'étendant transversalement aux bras (44) et monté à rotation sur le profilé transversal (46), et au moins une plaque de blocage (60) solidaire de l'axe de rotation à proximité d'un desdits rails,
- ledit rail comporte au moins un doigt de blocage (26), ladite au moins une plaque de blocage étant mobile entre une position de blocage dans laquelle elle peut coopérer avec ledit au moins un doigt afin de limiter le coulissement longitudinal de la platine suivant au moins une direction, et une position de déblocage dans laquelle elle est située à distance dudit au moins un doigt, autorisant le coulissement longitudinal de la platine suivant ladite au moins une direction.

2. Dispositif de fixation selon la revendication 1, **caractérisé en ce que,** chaque goujon (64, 66) présentant une tête (64a, 66a) supportée par un corps (64b, 66b), chaque lumière comporte une partie élargie (50a, 52a) et une partie étroite (50b, 52b) présentant des dimensions respectivement supérieure et inférieure à la tête d'un goujon, mais permettant le passage du corps d'un goujon, les lumières étant telles que, lorsque la platine (42) est en position de verrouillage, lesdits goujons soient situés en regard de la partie étroite de chaque lumière, et que, lorsque la platine est en position de déverrouillage, lesdits goujons soient situés en regard de la partie élargie de chaque lumière.

3. Dispositif de fixation selon la revendication 1 ou 2, **caractérisé en ce que** chaque rail (14) présente à proximité desdits orifices (16, 18) des butées (22, 24) aptes à bloquer un déplacement de la platine suivant au moins un axe vertical et à bloquer le déplacement des goujons suivant la direction longitudinale.

4. Dispositif de fixation selon l'une des revendications 1 à 3, **caractérisé en ce que** lesdits au moins deux rails (14) comportent chacun deux doigts de blocage (26, 28) situés dans un même plan longitudinal à une distance suffisante l'un de l'autre pour permettre l'insertion d'une plaque (60).

5. Dispositif de fixation selon l'une des revendications 1 à 4, **caractérisé en ce qu'**il comprend au moins un moyen de préhension (62) relié auxdits moyens de blocage afin de les manoeuvrer.

6. Dispositif de fixation selon l'une des revendications 1 à 5, **caractérisé en ce que,** lorsque la platine (42) est en position de verrouillage, le profilé transversal (46) est situé à proximité des extrémités desdits rails (14).

7. Dispositif de fixation selon l'une des revendications 1 à 6, **caractérisé en ce que** chaque rail (14) comporte sur sa partie supérieure, en regard desdits orifices, des butées élastiques (30, 32) destinées à venir en appui contre les goujons.

8. Siège amovible (2) pour véhicule automobile **caractérisé en ce qu'**il comprend au moins un dispositif de fixation (10) selon l'une des revendications précédentes.

## Claims

1. Attachment device (10) for a removable seat (2) on a floor (8) of a motor vehicle, comprising at least two arms, each arm (44) being mounted so as to slide and comprising at least two longitudinal slots (50, 52) allowing the passage of a first blocking pin (64) and second blocking pin (66) attached to the said floor, each arm sliding between a locked position in which the said pins are blocked in the slots, and an unlocked position in which the said pins are free, **characterized in that** it comprises:
- at least two rails (14) each comprising at least two orifices (16, 18) allowing a mounting on at least the first pin (64) and second pin (66),
- a locking plate (42) which comprises at least the two arms (44) fixedly attached to a transverse section (46) at their end, each arm (44) being mounted so as to slide in one of the said rails (14), the plate (42) sliding like its arms between the locked position in which the said pins are blocked in the slots, and the unlocked position in which the said pins are free so that the rails can be removed from said pins,
- blocking means (58, 60, 26, 28) which interact with the said rails (14) in order to block the longitudinal sliding of the plate in the locked position, the blocking means comprising a rotation spindle (58) extending transversely to the arms (44) and mounted so as to rotate on the transverse section (46) and at least one blocking plate (60) fixedly attached to the rotation spindle close to one of the said rails,
- the said rail comprises at least one blocking finger (26), the said at least one blocking plate being movable between a blocked position in which it may interact with the said at least one finger in order to limit the longitudinal sliding of the plate in at least one direction, and an unblocked position in which it is situated at a distance from the said at least one finger, allowing the longitudinal sliding of the plate in the said at least one direction.

2. Attachment device according to Claim 1, **characterized in that,** with each pin (64, 66) having a head (64a, 66a) supported by a body (64b, 66b), each slot comprises a widened portion (50a, 52a) and a narrow portion (50b, 52b) having dimensions that are respectively larger and smaller than the head of a pin, but allowing the body of a pin to pass through, the slots being such that, when the plate (42) is in the locked position, the said pins are situated opposite the narrow portion of each slot, and that, when the plate is in the unlocked position, the said pins are situated opposite the widened portion of each slot.

3. Attachment device according to Claim 1 or 2, **characterized in that** each rail (14) has, close to the said orifices (16, 18) stops (22, 24) capable of blocking a movement of the plate in at least one vertical axis and of blocking the movement of the pins in the longitudinal direction.

4. Attachment device according to one of Claims 1 to 3, **characterized in that** the said at least two rails (14) each comprise two blocking fingers (26, 28) situated in one and the same longitudinal plane at a sufficient distance from one another to allow the insertion of a plate (60).

5. Attachment device according to one of Claims 1 to 4, **characterized in that** it comprises at least one gripping means (62) connected to the said blocking means in order to operate them.

6. Attachment device according to one of Claims 1 to 5, **characterized in that,** when the plate (42) is in the locked position, the transverse section (46) is situated close to the ends of the said rails (14).

7. Attachment device according to one of Claims 1 to 6, **characterized in that** each rail (14) comprises, on its upper portion, opposite the said orifices, elastic stops (30, 32) designed to press against the pins.

8. Removable seat (2) for a motor vehicle, **characterized in that** it comprises at least one attachment device (10) according to one of the preceding claims.

## Patentansprüche

1. Vorrichtung (10) zum Befestigen eines entnehmbaren Sitzes (2) an einem Fußboden (8) eines Kraftfahrzeugs, mit wenigstens zwei Armen, wobei jeder Arm (44) gleitend angebracht ist und wenigstens zwei longitudinale Langlöcher (50, 52) aufweist, die den Durchgang eines ersten Blockierbolzens (64) und eines zweiten Blockierbolzens (66), die am Fußboden befestigt sind, ermöglichen, wobei jeder Arm zwischen einer Verriegelungsposition, in der die Bolzen in den Langlöchern blockiert sind, und einer Entriegelungsposition, in der die Bolzen frei sind, gleitet, **dadurch gekennzeichnet, dass** sie enthält:
- wenigstens zwei Schienen (14), wovon jede wenigstens zwei Öffnungen (16, 18) aufweist, die eine Montage wenigstens an dem ersten Bolzen (64) und an dem zweiten Bolzen (66) ermöglichen,
- eine Verriegelungsplatte (42), die wenigstens die zwei Arme (44) aufweist, die an ihrem Ende mit einem Querprofil (46) fest verbunden sind, wobei jeder Arm (44) in einer der Schienen (14) gleitend angebracht ist, wobei die Platte (42) wie ihre Arme zwischen der Verriegelungsposition, in der die Bolzen in den Langlöchern blockiert sind, und der Entriegelungsposition, in der die Bolzen frei sind, gleitet, derart, dass die Schienen von den Bolzen abgenommen werden können,
- Blockiermittel (58, 60, 26, 28), die mit den Schienen (14) zusammenwirken, um das longitudinale Gleiten der Platte in der Verriegelungsposition zu blockieren, wobei die Blockiermittel eine Drehwelle (58), die quer zu den Armen (44) verläuft und an dem Querprofil (46) drehbar angebracht ist, und wenigstens eine Blockierscheibe (60), die mit der Drehwelle in der Nähe einer der Schienen fest verbunden ist, aufweisen,
- wobei die Schiene wenigstens einen Blockierstift (26) aufweist, wobei die wenigstens eine Blockierscheibe zwischen einer Blockierposition, in der sie mit dem wenigstens einen Stift zusammenwirken kann, um das longitudinale Gleiten der Scheibe wenigstens in einer Richtung zu begrenzen, und einer nicht blockierten Position, in der sie sich in einem Abstand von dem wenigstens einen Stift befindet und das longitudinale Gleiten der Scheibe wenigstens in der einen Richtung zulässt, beweglich ist.

2. Befestigungsvorrichtung nach Anspruch 1, **dadurch gekennzeichnet, dass** dann, wenn jeder Bolzen (64, 66) einen durch einen Körper (64b, 66b) getragenen Kopf (64a, 66a) aufweist, jedes Langloch einen erweiterten Teil (50a, 52a) und einen schmalen Teil (50b, 52b), die Abmessungen besitzen, die größer bzw. kleiner als der Kopf eines Bolzens sind, jedoch den Durchgang des Körpers eines Bolzens zulassen, aufweist, wobei die Langlöcher derart sind, dass die Bolzen sich dann, wenn sich die Platte (42) in der Verriegelungsposition befindet, gegenüber dem schmalen Teil jedes Langlochs befinden, und derart, dass die Bolzen sich dann, wenn die Platte sich in der Entriegelungsposition befindet, gegenüber dem erweiterten Teil jedes Langlochs befinden.

3. Befestigungsvorrichtung nach Anspruch 1 oder 2, **dadurch gekennzeichnet, dass** jede Schiene (14) in der Nähe der Öffnungen (16, 18) Anschläge (22, 24) aufweist, die eine Verlagerung der Platte wenigstens längs einer vertikalen Achse blockieren können und die Verlagerungen der Bolzen in der longitudinalen Richtung blockieren können.

4. Befestigungsvorrichtung nach einem der Ansprüche 1 bis 3, **dadurch gekennzeichnet, dass** die wenigstens zwei Schienen (14) jeweils zwei Blockierstifte (26, 28) aufweisen, die sich in derselben longitudinalen Ebene in einem gegenseitigen Abstand befinden, der ausreicht, um das Einsetzen einer Scheibe (60) zu ermöglichen.

5. Befestigungsvorrichtung nach einem der Ansprüche 1 bis 4, **dadurch gekennzeichnet, dass** sie wenigstens ein Greifmittel (62) aufweist, das mit den Blockiermitteln verbunden ist, um diese zu betätigen.

6. Befestigungsvorrichtung nach einem der Ansprüche 1 bis 5, **dadurch gekennzeichnet, dass** sich das Querprofil (46) dann, wenn die Platte (42) in der Verriegelungsposition ist, in der Nähe der Enden der Schienen (14) befindet.

7. Befestigungsvorrichtung nach einem der Ansprüche 1 bis 6, **dadurch gekennzeichnet, dass** jede Schiene (14) an ihrem oberen Teil gegenüber den Öffnungen elastische Anschläge (30, 32) aufweist, die dazu vorgesehen sind, an den Bolzen anzuschlagen.

8. Entnehmbarer Sitz (2) für Kraftfahrzeug, **dadurch gekennzeichnet, dass** er wenigstens eine Befestigungsvorrichtung (10) nach einem der vorhergehenden Ansprüche enthält.
